# EUROPEAN PATENT APPLICATION

(11) **EP 2 608 027 A2**
(43) Date of publication of application: **26.06.2013**
(21) Application number: 12198070.0
(22) Date of filing: 19.12.2012
(51) Int. Cl.: G06F 9/48

(54) **Managing resource utilization within a cluster of computing devices**

(30) Priority: 19.12.2011 US 201113330380
(71) Applicant: VMWare, Inc., Palo Alto, CA 94304 (US)
(72) Inventor: Mann, Timothy P., Palo Alto, CA 94304 (US); Dorofeev, Andrei, San Jose, CA 95129 (US); Shanmuganathan, Ganesha, Palo Alto, CA 94304 (US); Holler, Anne Marie, Palo Alto, CA 94304 (US)
(74) Representative: Robinson, Ian Michael

(57) **Abstract**

Systems and methods described herein manage a computing device. A method includes receiving a threshold for an operating condition of a first computing device. An expected resource utilization of a computer program is determined. In addition, the method determines whether the computer program may be executed within the first computing device based on the operating condition threshold and the expected resource utilization of the computer program.

## Description

### BACKGROUND

The present invention relates generally to the field of resource management in a computer system, and generally to a method and system for managing resource utilization within a cluster of computer devices.

Software applications, such as virtual machines (VMs), may be executed by a group, or "cluster," of host computing devices. Each VM creates an abstraction of physical computing resources, such as a processor and memory, of the host executing the VM and executes a "guest" operating system, which, in turn, executes one or more software applications. The abstracted resources may be functionally indistinguishable from the underlying physical resources to the guest operating system and software applications.

At least some host computing devices are subject to power limits due to power supply constraints or user settings. A power limit of a host computing device can be set by a user or by external data center management software, for example. The power limit of a host computing device may be based on a capacity of a power supply coupled to the host computing device. The capacity of a power supply may be less than the power that the host computing device could otherwise use while the device is operating at full load. For example, the host computing device may be configured with insufficient power supply capacity, and/or one or more power supply components may fail, causing a reduction of power available to be supplied to the host computing device.

In addition, at least some host computing devices are subject to temperature limits due to a supported operating range of hardware components of the host computing devices. A temperature limit is often imposed upon the host computing device, for example, because operating the host computing device at excessive temperatures may cause components of the device to fail.

If a power or temperature limit is reached or exceeded, one or more processors of the host computing device may be throttled or forced to a lower power state in which instructions are executed more slowly. In some situations, the host computing device may shut down if the power or temperature limits are reached or exceeded. Accordingly, a host computing device may experience degraded performance and/or may not be able to satisfy resource reservations or commitments as a result of increased or excessive temperatures within the host computing device and/or as a result of power demand by the device that exceeds the power limit.

### SUMMARY

According to the present invention there is provided an apparatus and method as set forth in the appended claims. Other features of the invention will be apparent from the dependent claims, and the description which follows.

One or more embodiments described herein provide a method of managing a computing device. The method includes receiving a threshold for an operating condition of a first computing device. An expected resource utilization of a computer program is determined. In addition, the method determines whether the computer program may be executed within the first computing device based on the operating condition threshold and the expected resource utilization of the computer program.

In one example there is provided a system comprising a first computing device comprising a first processor configured to execute at least one virtual machine (VM) within a virtualization software layer; and a second computing device coupled to the first computing device. The second computing device comprises a second processor configured to receive a first value of an operating condition of the first computing device; access a threshold for the operating condition of the first computing device; determine whether the first value of the operating condition exceeds the operating condition threshold; and determine whether to migrate the VM away from the first computing device if the first value of the operating condition exceeds the operating condition threshold.

In one example, the second processor is further configured to receive a second value of an operating condition of a third computing device. In one example, the second processor is further configured to acess a threshold for the operating condition of the third computing device. In one example, the second processor is further configured to determine an expected resource utilization of the VM. In one example, the second processor is further configured to determine an expected change in the operating condition of the third computing device when the VM is executed within the third computing device. In one example, the second processor causes the VM to be migrated to the third VM if the expected change in the operating condition of the third computing device does not cause the operating threshold of the third computing device to be exceeded. In one example, the expected resource utilization of the VM includes an expected change in a load of a processor. In one example, the third computing device comprises a third processor, the second processor is configured to determine the expected change in the operating condition of the third computing device based on the expected change in the load of the third processor.

In one example there is provided a method of managing a computing device, the method comprising: receiving a threshold for an operating condition of a first computing device, wherein the operating condition includes at least one of a temperature of the first computing device and a power consumption of the first computing device; determining, by a processor, an expected resource utilization of a computer program; and determining, by a processor whether the computer program may be executed within the first computing device based on the operating condition threshold and the expected resource utilization of the computer program.

One example includes receiving a first value of the operating condition of the first computing device. One example includes determining an expected change in the operating condition if the computer program is executed within the first computing device based on the expected resource utilization of the computer program. One example includes determining whether the expected change in the operating condition is expected to cause the operating threshold to be exceeded. One example includes determining whether the computer program may be migrated to a second computing device based upon the determination that the computer program may not be executed within the first computing device without causing the operating condition to exceed the operating condition threshold.

In one example there is provided a cluster of computing devices, the cluster comprising: a first computing device; a second computing device; and a management device coupled to the first computing device and to the second computing device, the management device comprising a processor configured to: determine a first threshold for an operating condition for the cluster of computing devices; determine a second threshold for an operating condition for the first computing device based on the first threshold; determine a third threshold for an operating condition for the second computing device; and determine whether a virtual machine (VM) may be executed within one of the first computing device and the second computing device without causing one of the second threshold and the third threshold to be exceeded.

In one example, the second threshold is equal to the third threshold. In one example, the second threshold and the third threshold are set to a value equal to the first threshold divided by a number of computing devices within the cluster. In one example, the second threshold is based on at least one of a temperature and a power supply capacity of the first computing device. In one example, the processor is configured to receive a value of the operating condition of the first computing device. In one example, the processor is configured to determine whether the VM may be executed within the first computing device based on determining whether executing the VM is expected to cause the operating condition of the first computing device to exceed the second threshold based on the value received.

In one example there is provided a computer-readable storage medium having computer-executable instructions embodied thereon, wherein, when executed by a management processor, the computer-executable instructions cause the management processor to: receive a first value of an operating condition of a first computing device; access a threshold for the operating condition of the first computing device; and determine an expected change in the operating condition if a virtual machine (VM) is executed within the first computing device.

In one example, the computer-executable instructions further cause the management processor to generate a command to cause the VM to be executed within the first computing device if the expected change in the operating condition does not cause the operating condition threshold to be exceeded. In one example, the computer-executable instructions cause the management processor to cause the VM to be executed within the first computing device by migrating the VM from a second computing device to the first computing device. In one example, the computer-executable instructions further cause the management processor to determine an expected resource utilization of the VM. In one example, the computer-executable instructions further cause the management processor to receive a model of expected operating condition values based on a load of a processor included within the first computing device. In one example, the expected resource utilization is an expected change in a load of the first computing device processor, the computer-executable instructions further cause the management processor to determine an expected change in the operating condition of the first computing device based on the expected change in the load of the first computing device processor when the VM is executed within the first computing device. In one example, the computer-executable instructions further cause the management processor to determine the expected change in the operating condition of the first computing device using the model of expected operating condition values and the expected change in the load of the first computing device processor.

This summary introduces a selection of concepts that are described in more detail below. This summary is not intended to identify essential features, nor to limit in any way the scope of the claimed subject matter.

### BRIEF DESCRIPTION OF THE DRAWINGS

FIG. 1 is a block diagram of an exemplary computing device.

FIG. 2 is a block diagram of virtual machines that are instantiated on a computing device, such as the computing device shown in FIG. 1.

FIG. 3 is a block diagram of an exemplary cluster of computing devices shown in FIG. 1.

FIG. 4 is a graph of an exemplary operating condition model of a computing device that may be used with the cluster shown in FIG. 3.

FIG. 5 is a flowchart of an exemplary method for managing a cluster of computing devices, such as the cluster shown in FIG. 3.

FIG. 6 is a flowchart of another exemplary method for managing a cluster of computing devices, such as the cluster shown in FIG. 3.

FIG. 7 is a flowchart of another exemplary method for managing a cluster of computing devices, such as the cluster shown in FIG. 3.

### DETAILED DESCRIPTION

Embodiments described herein provide methods and devices for managing a cluster of computing devices. In an embodiment, each computing device in the cluster measures or determines current values of one or more operating conditions, such as current values of a temperature within the computing device, a temperature differential of the computing device with respect to an ambient temperature outside (or proximate to) the computing device, and a power consumption of the computing device. The computing devices also determine a threshold for the operating conditions and transmit data representative of the operating condition thresholds and the current values of the operating conditions to a management device. The management device determines whether the operating condition thresholds are exceeded by the current values of the operating conditions. The management device also determines a model of operating conditions with respect to a load of the processor of each computing device. The model is used to determine if one or more computer programs, such as one or more virtual machines (VMs), may be executed within the computing device without causing an operating condition threshold of the computing device to be exceeded. In addition, the management device may determine one or more operating condition thresholds for the cluster of computing devices, and may determine one or more operating condition thresholds of the individual computing devices based on the threshold of the cluster.

Accordingly, as described herein, the management device facilitates ensuring that the operating condition thresholds, such as power and temperature thresholds, are not exceeded as a result of VMs or other programs being executed within the computing devices. In addition, the processor loads on constrained computing devices may be reduced or alleviated by migrating the VMs to other, less constrained, computing devices. As such, power and temperature levels and thresholds may be set or adjusted to achieve a desired balance of power, temperature, and/or processor loads throughout the cluster.

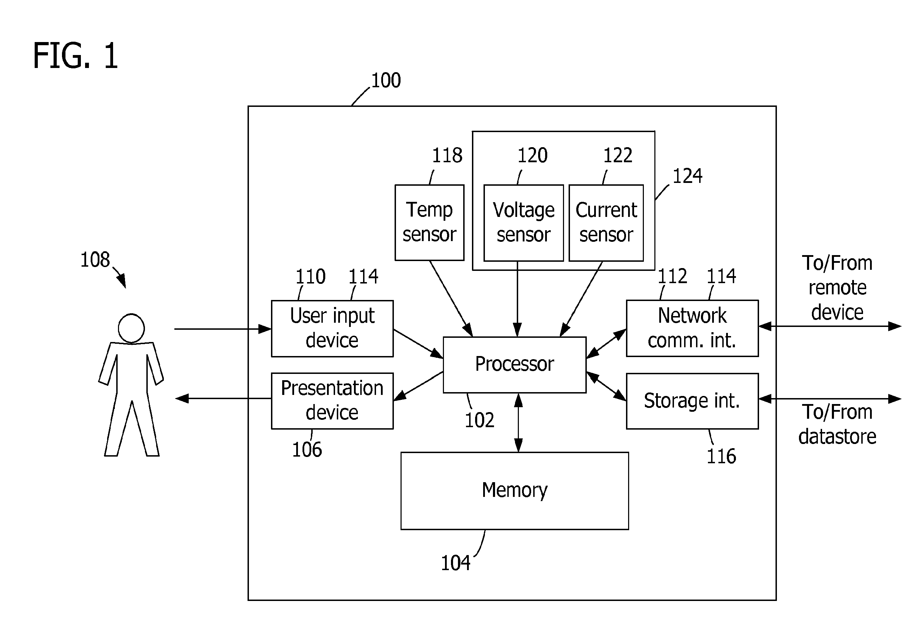

FIG. 1 is a block diagram of an exemplary computing device 100. Computing device 100 includes a processor 102 for executing instructions. In some embodiments, computer-executable instructions are stored in a memory 104 for performing one or more of the operations described herein. Memory 104 is any device allowing information, such as executable instructions, configuration options (e.g., threshold values), and/or other data, to be stored and retrieved. For example, memory 104 may include one or more computer-readable storage media, such as one or more random access memory (RAM) modules, flash memory modules, hard disks, solid state disks, and/or optical disks.

In some embodiments, computing device 100 also includes at least one presentation device 106 for presenting information to a user 108. Presentation device 106 is any component capable of conveying information to user 108. Presentation device 106 may include, without limitation, a display device (e.g., a liquid crystal display (LCD), organic light emitting diode (OLED) display, or "electronic ink" display) and/or an audio output device (e.g., a speaker or headphones). In some embodiments, presentation device 106 includes an output adapter, such as a video adapter and/or an audio adapter. An output adapter is operatively coupled to processor 102 and configured to be operatively coupled to an output device, such as a display device or an audio output device.

The computing device 100 may include a user input device 110 for receiving input from user 108. User input device 110 may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of presentation device 106 and user input device 110.

Computing device 100 also includes a network communication interface 112, which enables computing device 100 to communicate with a remote device (e.g., another computing device 100) via a communication medium, such as a wired or wireless packet network. For example, computing device 100 may transmit and/or receive data via network communication interface 112. User input device 110 and/or network communication interface 112 may be referred to as an input interface 114 and may be configured to receive information, such as configuration options (e.g., threshold values), from a user. In some embodiments, presentation device 106 and/or user input device 110 are remote from computing device 100 and transmit and/or receive data via network communication interface 112.

Computing device 100 further includes a storage interface 116 that enables computing device 100 to communicate with one or more datastores. In exemplary embodiments, storage interface 116 couples computing device 100 to a storage area network (SAN) (e.g., a Fibre Channel network) and/or to a network-attached storage (NAS) system (e.g., via a packet network). The storage interface 116 may be integrated with network communication interface 112.

In addition, computing device 100 includes a plurality of measurement devices that include, for example, one or more temperature sensors 118, voltage sensors 120, and/or current sensors 122. In an embodiment, computing device 100 includes at least two temperature sensors 118 that measure a temperature within computing device 100 and an ambient temperature outside of (i.e., proximate to) computing device 100. Additionally or alternatively, computing device 100 may include any number of temperature sensors 118 that measure a temperature of one or more components of computing device 100. Temperature sensors 118 generate temperature measurement signals (hereinafter referred to as "temperature measurements") indicative of the measured temperature.

Voltage sensor 120 measures a voltage of computing device 100, such as a voltage supplied to computing device from an electrical power source, and generates a voltage measurement signal (hereinafter referred to as a "voltage measurement") indicative of the measured voltage. Current sensor 122 measures a current flowing through computing device 100, such as a current supplied to computing device by the electrical power source, and generates a current measurement signal (hereinafter referred to as a "current measurement") indicative of the measured current. In one embodiment, voltage sensor 120 and current sensor 122 are included within a power meter 124 that determines or measures the power consumption of computing device 100 (e.g., the power supplied to computing device 100 by the electrical power source). For example, power meter 124 receives a voltage measurement from voltage sensor 120 and a current measurement from current sensor 122 and multiplies the voltage and current measurements to determine the power consumption of computing device 100. Power meter 124 generates a power measurement signal (hereinafter referred to as a "power measurement") indicative of the determined or measured power consumption of computing device 100.

Each sensor transmits signals representative of the sensor measurements to processor 102. Processor 102 determines one or more operating conditions of computing device 100 and may transmit data representative of the operating conditions to a remote management device, such as a remote computing device 100. The operating conditions determined by processor 102 may include, for example, a temperature within computing device, an ambient temperature proximate to computing device 100, a power consumption of computing device, and/or any other condition that enables computing device 100 to function as described herein.

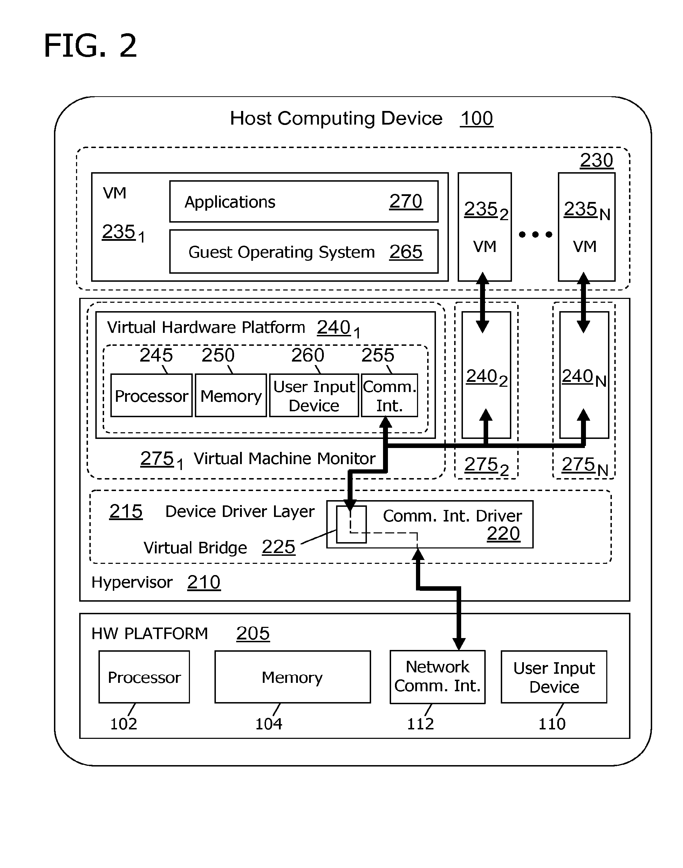

FIG. 2 depicts a block diagram of virtual machines 235₁, 235₂... 235_{N} that are instantiated on a computing device 100, which may be referred to as a "host." Computing device 100 includes a hardware platform 205, such as an x86 architecture platform. Hardware platform 205 may include processor 102, memory 104, network communication interface 112, user input device 110, and other input/output (I/O) devices, such as a presentation device 106 (shown in FIG. 1). A virtualization software layer, also referred to hereinafter as a hypervisor 210, is installed on hardware platform 205.

The virtualization software layer supports a virtual machine execution space 230 within which multiple virtual machines (VMs 235₁-235_{N}) may be concurrently instantiated and executed. Hypervisor 210 includes a device driver layer 215, and maps physical resources of hardware platform 205 (e.g., processor 102, memory 104, network communication interface 112, and/or user input device 110) to "virtual" resources of each of VMs 235₁-235_{N} such that each of VMs 235₁-235_{N} has its own virtual hardware platform (e.g., a corresponding one of virtual hardware platforms 240₁-240_{N}). Each virtual hardware platform includes its own emulated hardware (such as a processor 245, a memory 250, a network communication interface 255, a user input device 260 and other emulated I/O devices in VM 235₁).

In some embodiments, memory 250 in first virtual hardware platform 240₁ includes a virtual disk that is associated with or "mapped to" one or more virtual disk images stored in memory 104 (e.g., a hard disk or solid state disk) of computing device 100. The virtual disk image represents a file system (e.g., a hierarchy of directories and files) used by first virtual machine 235₁ in a single file or in a plurality of files, each of which includes a portion of the file system. In addition, or alternatively, virtual disk images may be stored in memory 104 of one or more remote computing devices 100, such as in a storage area network (SAN) configuration. In such embodiments, any quantity of virtual disk images may be stored by the remote computing devices 100.

Device driver layer 215 includes, for example, a communication interface driver 220 that interacts with network communication interface 112 to receive and transmit data from, for example, a local area network (LAN) connected to computing device 100. Communication interface driver 220 also includes a virtual bridge 225 that simulates the broadcasting of data packets in a physical network received from one communication interface (e.g., network communication interface 112) to other communication interfaces (e.g., the virtual communication interfaces of VMs 235₁-235_{N}). Each virtual communication interface may be assigned a unique virtual Media Access Control (MAC) address that enables virtual bridge 225 to simulate the forwarding of incoming data packets from network communication interface 112. In an embodiment, network communication interface 112 is an Ethernet adapter that is configured in "promiscuous mode" such that all Ethernet packets that it receives (rather than just Ethernet packets addressed to its own physical MAC address) are passed to virtual bridge 225, which, in turn, is able to further forward the Ethernet packets to VMs 235₁-235_{N}. This configuration enables an Ethernet packet that has a virtual MAC address as its destination address to properly reach the VM in computing device 100 with a virtual communication interface that corresponds to such virtual MAC address.

Virtual hardware platform 240₁ may function as an equivalent of a standard x86 hardware architecture such that any x86-compatible desktop operating system (e.g., Microsoft WINDOWS brand operating system, LINUX brand operating system, SOLARIS brand operating system, NETWARE, or FREEBSD) may be installed as guest operating system (OS) 265 in order to execute applications 270 for an instantiated VM, such as first VM 235₁. Virtual hardware platforms 240₁-240_{N} may be considered to be part of virtual machine monitors (VMM) 275₁-275_{N} which implement virtual system support to coordinate operations between hypervisor 210 and corresponding VMs 235₁-235_{N}. Those with ordinary skill in the art will recognize that the various terms, layers, and categorizations used to describe the virtualization components in FIG. 2 may be referred to differently without departing from their functionality or the spirit or scope of the disclosure. For example, virtual hardware platforms 240₁-240_{N} may also be considered to be separate from VMMs 275₁-275_{N}, and VMMs 275₁-275_{N} may be considered to be separate from hypervisor 210. One example of hypervisor 210 that may be used in an embodiment of the disclosure is included as a component in VMware's ESX brand software, which is commercially available from VMware, Inc.

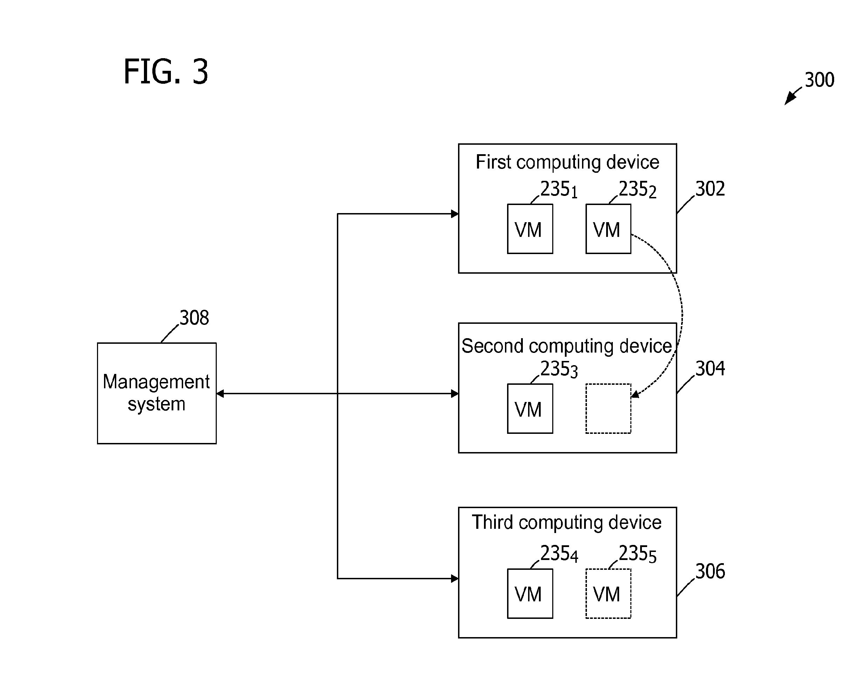

FIG. 3 is a block diagram of an exemplary cluster 300 of computing devices 100 (shown in FIG. 1) that may include a first computing device 302, a second computing device 304, and a third computing device 306. It should be understood that while cluster 300 is illustrated in FIG. 3 as including three computing devices 100, cluster 300 may include any number of computing devices 100. In addition, cluster 300 includes a management device 308 coupled to computing devices 100 of cluster 300. In an embodiment, management device 308 is, or includes, a computing device 100. Alternatively, management device 308 is, or includes, one or more computer programs or modules embodied within one or more computer-readable medium of a computing device 100. For example, management device 308 may be a program or a VM 235₁-235_{N} executing on one or more computing devices 100 of cluster 300, such as first computing device 302, second computing device 304, and/or third computing device 306.

In an embodiment, management device 308 controls a placement and/or an execution of VMs 235₁-235_{N} within computing devices 100 of cluster 300. For example, first computing device 302 may include a first VM 235₁ and a second VM 235₂, second computing device 304 may include a third VM 235₃, and third computing device 306 may include a fourth VM 235₄. As described more fully herein, management device 308 may determine whether second VM 235₂ may be moved (also known as "migrated") from first computing device 302 to second computing device 304 such that second computing device 304 executes both second VM 235₂ and third VM 235₃. In addition, management device 308 may determine whether a fifth VM 235₅ should be instantiated within third computing device 306 such that third computing device 306 executes fourth VM 235₄ and fifth VM 235₅.

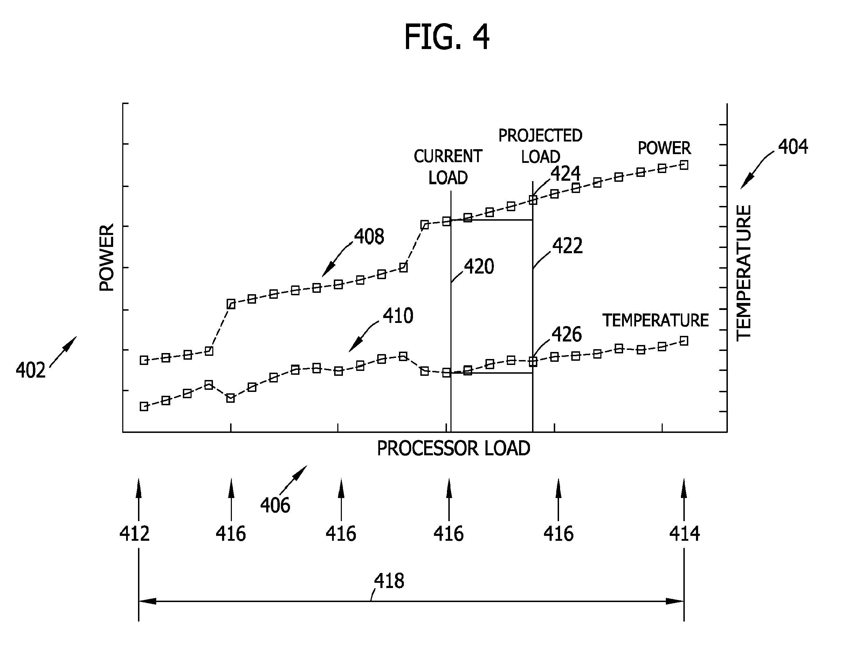

FIG. 4 is a graph of an exemplary operating condition model 400 of a computing device 100 that may be used with cluster 300 (shown in FIG. 3). Model 400 illustrates a power 402 consumed by computing device 100 and a temperature 404 of computing device 100 (both shown in the ordinate axis of the graph) with respect to an operating load 406 (shown on the abscissa axis) of processor 102. In an embodiment, temperature 404 is a temperature differential representative of a difference between the temperature within computing device 100 and the ambient temperature proximate to computing device 100. Alternatively, temperature 404 may represent the temperature within computing device 100 and/or the temperature of one or more components of computing device 100, such as processor 102.

In an embodiment, load 406 is indicative of an operating frequency and/or a utilization of processor resources. For example, processor 102 may increase or decrease the operating frequency based on a number and/or a type of programs or processes executing on processor 102. In addition, the number and/or type of programs or processes executing on processor 102 may affect the utilization of the processor resources, such as internal caches, processing units, pipelines, and/or other components of processor 102. As such, a higher load 406 represents a higher utilization of processor 102 by programs or processes executing thereon, such as VMs 235₁-235_{N}, and a lower load 406 represents a lower utilization of processor 102 by programs or processes executing thereon.

In an embodiment, computing devices 100 of cluster 300 each generate model 400 based on measurements received from respective measurement devices (e.g., from temperature sensors 118 and/or power meters 124 of each computing device 100). For example, a power curve 408 is generated for computing device 100 using power measurements received from power meter 124 and a temperature curve 410 is generated using temperature measurements received from temperature sensor 118. Alternatively, management device 308 generates model 400 using measurements received from computing device 100.

Moreover, in an embodiment, computing device 100 generates power curve 408 based on an assumption that power 402 consumed by computing device 100 is a function of, or based on, load 406 of processor 102. More specifically, computing device 100 assumes that power 402 consumption of computing device 100 as a result of components other than processor 102 (e.g., memory, storage devices, peripheral devices, cooling fans, and/or other components) is either substantially steady state or is substantially based on load 406 of processor 102. Accordingly, computing device 100 generates power curve 408 as a function of, or based on, load 406 of processor 102. In a similar manner, computing device 100 assumes that temperature 404 of computing device 100 is a function of, or is based on, load 406 of processor 102, and generates temperature curve 410 according to this assumption.

In an embodiment, computing device 100 determines the power 402 consumed by device 100 at a lowest operating load 412, such as a load 412 of processor 102 while operating at a lowest frequency and/or a lowest utilization of processor resources (e.g., while operating one or more idle processes) (hereinafter referred to as a "minimum load 412"). Computing device 100 also determines the power 402 consumed by device 100 at a highest operating load 414, such as a load 414 of processor 102 while operating at a highest frequency and/or a highest utilization of processor resources (hereinafter referred to as a "maximum load 414"). In one embodiment, computing device 100 may also determine the power 402 consumed by device 100 at one or more intermediate processor loads 416. Computing device 100 creates power curve 408 to estimate power 402 consumed by device 100 over an operating load spectrum 418 that is defined between minimum load 412 and maximum load 414. For example, computing device 100 interpolates values of power 402 consumed by device 100 at different processor loads 406 based on the measured or determined power consumption values at minimum load 412, maximum load 414, and/or intermediate loads 416.

In a similar manner, computing device 100 also determines the temperature 404 (e.g., the temperature differential) of device 100 at minimum load 412, at maximum load 414, and/or at one or more intermediate loads 416. Computing device 100 creates temperature curve 410 to estimate temperature 404 of device 100 over load spectrum 418. For example, computing device 100 interpolates values of temperature 404 of device 100 at different processor loads 406 based on the measured or determined temperature values at minimum load 412, maximum load 414, and/or intermediate loads 416.

Each computing device 100 also determines a power threshold that is representative of a power consumption amount or level that computing device 100 is prevented from exceeding, and a temperature threshold (or temperature differential threshold) representative of a temperature or a temperature differential that computing device 100 is prevented from exceeding. In an embodiment, each computing device 100 transmits data representative of the power threshold, the temperature threshold, a current power 402 consumption of computing device 100, and a current temperature 404 or temperature differential to management device 308. In addition, computing devices 100 may transmit data representative of model 400, power curve 408, temperature curve 410, and/or one or more values of power curve 408 and/or temperature curve 410 to management device 308.

Additionally or alternatively, management device 308 uses the data received from computing devices 100 to determine power curve 408 and/or temperature curve 410, or to otherwise determine the expected power 402 consumption and/or temperature 404 of each computing device 100 based on load of the computing device processor 102. In addition, as described more fully herein, management device 308 uses the data received from computing devices 100 to determine an expected effect of migrating one or more VMs 235₁-235_{N} to a computing device 100 and/or executing one or more VMs 235₁-235_{N} within computing device 100. Management device 308 also uses the data received from computing devices 100 to determine whether one or more constraints (e.g., power threshold and/or temperature threshold) are violated based on the current operating condition of a computing device 100.

As illustrated in FIG. 4, management device 308 may identify or determine a current load 420 of processor 102 using model 400. Management device 308 may also identify or determine an expected or projected load 422 of processor 102 based on an expected resource utilization (e.g., an expected change in load 406) of a VM 235₁-235_{N} if VM 235₁-235_{N} is executed by processor 102. Management device 308 references power curve 408 and temperature curve 410 to determine an expected power 424 consumption of computing device 100 and an expected temperature 426 of computing device 100 at projected load 422. Expected power 424 consumption and expected temperature 426 may be used to determine whether a power threshold and/or a temperature threshold are expected to be exceeded when VM 235₁-235_{N} is executed within computing device 100.

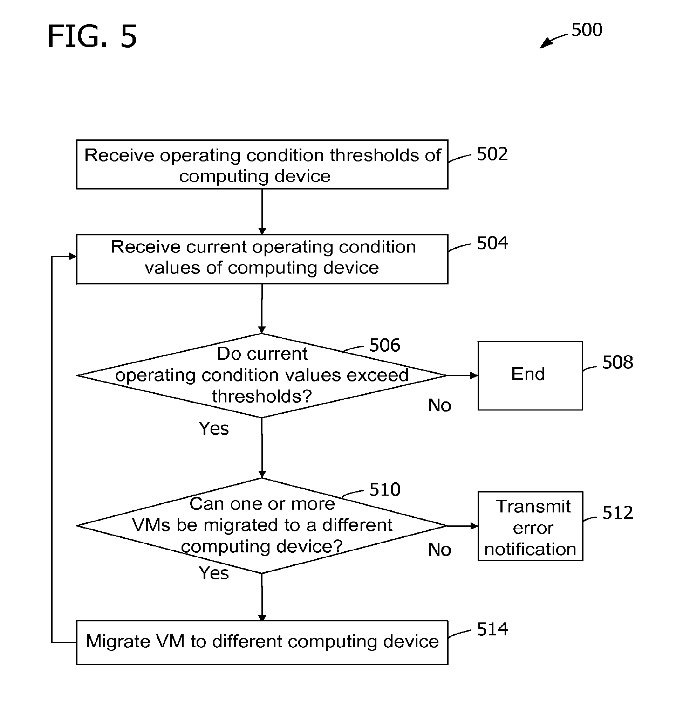

FIG. 5 is a flowchart of an exemplary method 500 for managing a cluster of computing devices 100 (shown in FIG. 1), such as cluster 300 (shown in FIG. 3). Method 500 is executed by a computing device 100, such as management device 308 (shown in FIG. 3). For example, a plurality of computer-executable instructions are embodied within a computer-readable medium, such as memory 104 or memory 250 of management device 308. The instructions, when executed by a processor, such as processor 102 or processor 245 of management device 308 (also referred to herein as a "management processor"), cause the processor to execute the steps of method 500 and/or to function as described herein.

In an embodiment, operating condition thresholds of each computing device 100 within cluster 300 are received 502. For example, management device 100 receives 502 the temperature and power thresholds of each computing device 100 from devices 100. Alternatively, the thresholds are stored within management device memory 104 or memory 250, and/or within another device or system, and management device 308 receives 502 the thresholds therefrom.

In addition, management device 308 receives 504 current values of the operating conditions of each computing device 100. As used herein, the term "current value" refers to a recent or most-recent value that has been generated by a measurement device, such as temperature sensor 118 and power meter 124 (both shown in FIG. 1). Management device 308 determines 506 whether the current operating condition values exceed one or more operating condition thresholds. For example, management device 308 determines 506 whether the current temperature of first computing device 302 (shown in FIG. 3) exceeds the temperature threshold of first computing device 302 and/or whether the current power consumption of first computing device 302 exceeds the power threshold of device 302. If the current operating condition values do not exceed the operating condition thresholds, method 500 ends 508.

However, if management device 308 determines 506 that one or more operating condition values exceed an operating condition threshold, device 308 determines 510 whether one or more VMs 235₁-235_{N} (or other computer programs) can be migrated to a different computing device 100, such as second computing device 304 (shown in FIG. 3). In an embodiment, as described more fully herein, management device 308 determines whether migrating a VM 235₁-235_{N} will generate an additional load for processor 102 of second computing device 304 such that one or more operating condition values of second computing device 304 are expected to exceed one or more operating condition thresholds of device 304.

If management device 308 determines 510 that a VM 235₁-235_{N} is not able to be migrated to another computing device 100, for example, without causing an operating condition threshold to be exceeded, management device 308 does not migrate VM 235₁-235_{N} (and/or prevents VM 235₁-235_{N} from being migrated) and transmits 512 an error notification to a user or to a remote device or system. However, if management device 308 determines 510 that a VM 235₁-235_{N} can be moved to another computing device 100, management device 308 migrates 514 the VM 235₁-235_{N} to the computing device 100, or recommends migrating VM 235₁-235_{N} to the computing device 100. For example, management device 308 may recommend migrating a VM 235₁-235_{N} to a computing device 100 by transmitting a command or request to migrate VM 235₁-235_{N} and/or by notifying a user of a suitable migration. Method 500 returns to receiving 504 current operating condition values of other computing devices 100 within cluster 300 to determine whether the operating condition values exceed the respective thresholds.

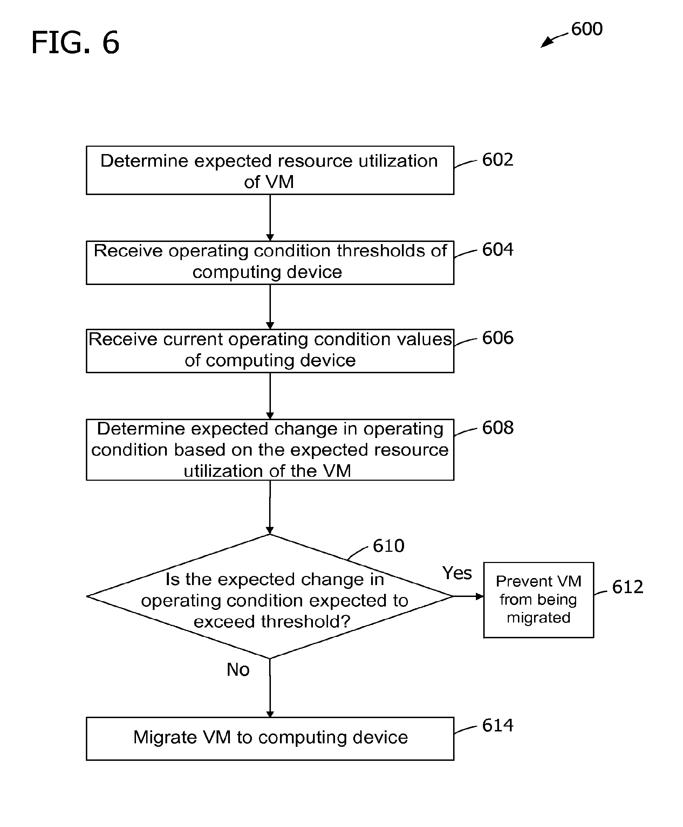

FIG. 6 is a flowchart of another exemplary method 600 for managing a cluster of computing devices 100 (shown in FIG. 1), such as cluster 300 (shown in FIG. 3). Method 600 is executed by a computing device 100, such as management device 308 (shown in FIG. 3). For example, a plurality of computer-executable instructions are embodied within a computer-readable medium, such as memory 104 or memory 250 of management device 308. The instructions, when executed by a processor, such as processor 102 or processor 245 of management device 308, cause the processor to execute the steps of method 600 and/or to function as described herein.

In an embodiment, method 600 may be used in combination with other methods, such as method 500 (shown in FIG. 5), to determine whether a VM 235₁-235_{N} can be migrated to, and/or executed within, a computing device 100 (hereinafter referred to as a "destination computing device 100"). For example, method 600 may be used to determine whether a VM 235₁-235_{N} may be migrated from first computing device 302 to second computing device 304 (both shown in FIG. 3). In addition, method 600 may be used to determine if a VM 235₁-235_{N} may be initially instantiated and/or executed within a computing device 100, such as third computing device 306 (shown in FIG. 3). In one embodiment, instantiating and/or executing a VM 235₁-235_{N} within a computing device 100 (i.e., without migrating VM 235₁-235_{N} from another computing device 100) may be viewed as performing a migration of VM 235₁-235_{N} from "nowhere" to the destination computing device 100 (i.e., to the computing device 100 that VM 235₁-235_{N} will be instantiated and/or executed within). In such an embodiment, management device 308 may transmit a command to computing device 100 (or to another device or system) to cause the VM 235₁-235_{N} to be instantiated and/or executed within destination computing device 100.

Method 600 includes determining 602 an expected resource utilization of a VM 235₁-235_{N}. For example, management device 308 determines 602 an expected increase or change in load 406 (shown in FIG. 4) that is expected to occur if VM 235₁-235_{N} is migrated to, and/or executed within, computing device 100. In one embodiment, management device 308 determines the expected resource utilization (e.g., the increase in load 406) of VM 235₁-235_{N} by receiving historical or reference data stored within memory 104 or memory 250.

Management device 308 receives 604 operating condition thresholds of computing device 100 and receives 606 current operating condition values of computing device 100 in a similar manner as described above in steps 502 and 504 (shown in FIG. 5). In addition, management device 308 determines 608 an expected change in one or more operating conditions (i.e., a change in the operating condition values) of destination computing device 100 based on the expected resource utilization of VM 235₁-235_{N}. In an embodiment, management device 308 uses model 400 to determine 608 an expected change in power 402 consumed by destination computing device 100 and/or to determine 608 an expected change in temperature 404 (shown in FIG. 4) of destination computing device 100. More specifically, management device 308 adds the expected resource utilization (i.e., expected additional load 406) caused by executing VM 235₁-235_{N} to a current load 420 of destination computing device 100 to determine a projected load 422 of destination computing device 100. Management device 308 correlates projected load 422 to temperature curve 410 and/or power curve 408 to determine an expected temperature 426 of, and/or power 424 consumed by, destination computing device 100. Management device 308 determines 608 the expected change in temperature 404 and/or power 402 consumption by subtracting expected temperature 426 and/or power 424 consumption from the current temperature 404 and/or power 402 consumption values of destination computing device 100, i.e., the values of temperature 404 and/or power 402 consumption at current load 420.

In an embodiment, management device 308 determines 610 whether the expected change in one or more operating condition values of destination computing device 100 is expected to exceed one or more operating condition thresholds of device 100. For example, management device 308 adds the expected change in the operating condition value to the current value of the operating condition to determine the expected value of the operating condition. Management device 308 compares the expected value of the operating condition with the operating condition threshold to determine 610 whether the threshold is expected to be exceeded by migrating VM 235₁-235_{N} to destination computing device 100.

If management device 308 determines 610 that the expected change in one or more operating condition values is expected to cause an operating condition threshold of destination computing device 100 to be exceeded, management device 308 prevents 612 VM 235₁-235_{N} from being migrated to destination computing device 100. Management device 308 may then determine whether VM 235₁-235_{N} may be migrated to another computing device 100 in a similar manner as described herein. If, however, management device 308 determines 610 that the expected change in one or more operating condition values is not expected to cause an operating condition threshold of destination computing device 100 to be exceeded, management device 308 migrates 614, or recommends migrating, VM 235₁-235_{N} to destination computing device 100.

While the embodiments described herein refer to determining whether one or more VMs 235₁-235_{N} can be migrated to, or executed within, a computing device, it should be recognized that method 600 is not limited to VMs 235₁-235_{N}. Rather, method 600 (and other methods described herein) may be used to determine if other computer programs may be executed within, and/or migrated to, a computing device 100.

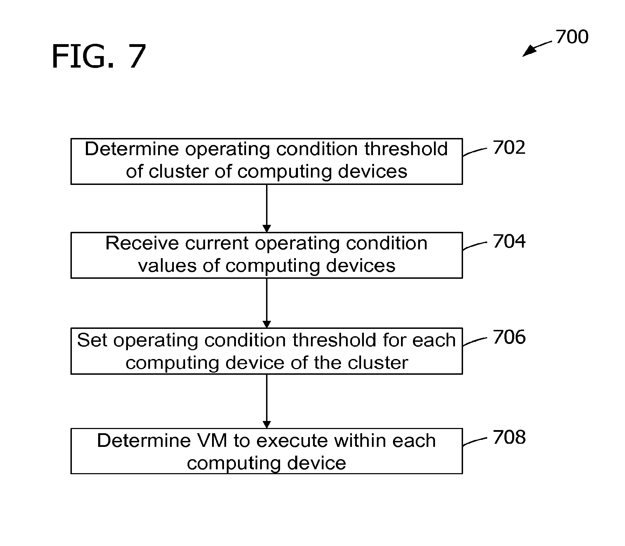

FIG. 7 is a flowchart of another exemplary method 700 for managing a cluster of computing devices 100 (shown in FIG. 1), such as cluster 300 (shown in FIG. 3). Method 700 is executed by a computing device 100, such as management device 308 (shown in FIG. 3). For example, a plurality of computer-executable instructions are embodied within a computer-readable medium, such as memory 104 or memory 250 of management device 308. The instructions, when executed by a processor, such as processor 102 or processor 245 of management device 308, cause the processor to execute the steps of method 700 and/or to function as described herein.

In an embodiment, management device 308 determines 702 an operating condition threshold of cluster 300. For example, management device 308 determines 702 a temperature threshold for the entire cluster 300 (i.e., for the aggregated temperatures of each computing device 100 within cluster 300). In a similar manner, management device 308 determines 702 a power threshold for the entire cluster 300, or any other operating condition threshold for cluster 300. In one embodiment, a user enters one or more operating condition thresholds into management device 308.

Management device 308 receives 704 data representative of the current operating condition values of computing devices 100 within cluster 300 in a similar manner as described in step 504 (shown in FIG. 5). In an embodiment, management device 308 sets 706 one or more operating condition thresholds, such as a temperature threshold and a power threshold, for each computing device 100 of cluster 300. The operating condition thresholds may be set 706, for example, by dividing the threshold value of cluster 300 equally between each computing device 100. For example, if a power threshold for cluster 300 is determined 702 to be 10,000 watts (W), and cluster 300 includes 10 computing devices 100, the power threshold for each computing device 100 may be set 706 to about 1,000 W. Alternatively, the operating condition thresholds may be set 706 based on a capacity (such as a temperature or a power supply capacity) or a demand (such as an amount of load 406 demanded) of each computing device 100. For example, if first computing device 302 (shown in FIG. 3) has a more efficient cooling system than a cooling system of second computing device 304, the power threshold of first computing device 302 may be set 706 to a value higher than the power threshold of second computing device 304 such that first computing device 302 may include more VMs 235₁-235_{N} (or other programs or processes) executing thereon. Accordingly, first computing device 302 may operate at a higher load 406 than second computing device 304 as an increased temperature due to the increased load 406 may be offset by the more efficient cooling system to facilitate preventing the temperature threshold of first computing device 302 from being exceeded.

Management device selects or determines 708 the VMs 235₁-235_{N} to instantiate or execute within each computing device 100 of cluster 300. For example, management device 308 determines how much load 406 each computing device 100 may operate at based on the operating condition thresholds set 706 for each device 100. Management device 308 may determine whether one or more constraints are violated (e.g., whether one or more operating condition thresholds are exceeded) for each computing device 100 within cluster 300 using method 500. Management device 308 may also determine whether one or more VMs 235₁-235_{N} may be moved between computing devices 100, or instantiated and/or executed within one or more computing devices 100 of cluster 300 using method 600. Management device 308 may cause the VMs 2351-235N to be instantiated, executed, and/or migrated to one or more computing devices 100 by generating and transmitting one or more commands to computing devices 100 to instantiate, execute, and/or migrate the VMs 235₁-235_{N} as described herein. Accordingly, method 700 facilitates balancing loads 406 across cluster 300 based on temperatures of computing devices 100 and/or the power consumption each computing device 100 within cluster 300.

Exemplary Operating Environment

The management device as described herein may be performed by a computer or computing device. A computer or computing device may include one or more processors or processing units, system memory, and some form of computer-readable media. Exemplary computer-readable media include flash memory drives, digital versatile discs (DVDs), compact discs (CDs), floppy disks, and tape cassettes. By way of example and not limitation, computer-readable media comprise computer storage media and communication media. Computer storage media store information such as computer-readable instructions, data structures, program modules, or other data. Communication media typically embody computer-readable instructions, data structures, program modules, or other data in a modulated data signal such as a carrier wave or other transport mechanism and include any information delivery media. Combinations of any of the above are also included within the scope of computer-readable media.

Although described in connection with an exemplary computing system environment, embodiments of the disclosure are operative with numerous other general purpose or special purpose computing system environments or configurations. Examples of well known computing systems, environments, and/or configurations that may be suitable for use with aspects of the disclosure include, but are not limited to, mobile computing devices, personal computers, server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Embodiments of the disclosure may be described in the general context of computer-executable instructions, such as program modules, executed by one or more computers or other devices. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions or the specific components or modules illustrated in the figures and described herein. Other embodiments of the disclosure may include different computer-executable instructions or components having more or less functionality than illustrated and described herein.

Aspects of the disclosure transform a general-purpose computer into a special-purpose computing device when programmed to execute the instructions described herein.

The operations illustrated and described herein may be implemented as software instructions encoded on a computer-readable medium, in hardware programmed or designed to perform the operations, or both. For example, aspects of the disclosure may be implemented as a system on a chip.

The order of execution or performance of the operations in embodiments of the disclosure illustrated and described herein is not essential, unless otherwise specified. That is, the operations may be performed in any order, unless otherwise specified, and embodiments of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

Although a few example embodiments have been shown and described, it will be appreciated by those skilled in the art that various changes and modifications might be made without departing from the scope of the invention, as defined in the appended claims.

## Claims

1. A computing system, comprising:
a first computing device (302) comprising a first processor configured to execute at least one virtual machine, VM, (235) within a virtualization software layer (210); and
a management device (308) coupled to the first computing device (302), the management device (308) comprising a processor that is configured to:
receive a first value of an operating condition of the first computing device (302);
access a threshold for the operating condition of the first computing device (302);
determine whether the first value of the operating condition exceeds the operating condition threshold; and
determine whether to migrate the virtual machine away from the first computing device (302) when the first value of the operating condition exceeds the operating condition threshold.

2. The system of claim 1, wherein the management device (308) is further configured to:
receive a second value of an operating condition of a second computing device (304);
access a threshold for the operating condition of the second computing device (304);
determine an expected resource utilization of the VM (235); and
determine an expected change in the operating condition of the second computing device (304) when the VM (235) is executed within the second computing device (304).

3. The system of claim 2, wherein the management device (308) causes the VM (235) to be migrated to the second computing device (304) when the expected change in the operating condition of the second computing device (304) does not cause the operating threshold of the second computing device (304) to be exceeded.

4. The system of claim 2 or 3, wherein the expected resource utilization of the VM (235) includes an expected change in a load of a processor (102).

5. The system of claim 4, wherein the second computing device (304) comprises a second processor, and the management device (308) is configured to determine the expected change in the operating condition of the second computing device (304) based on the expected change in the load of the second processor.

6. The system of any preceding claim, wherein the system comprises a cluster of computing devices (302-308), the cluster comprising:
the first computing device (302);
at least one a second computing device (304, 306); and
the management device (308) coupled to the first computing device (302) and to the second computing device (304, 306), the management device (308) comprising a processor configured to:
determine a first threshold for an operating condition for the cluster of computing devices (302, 304);
determine a second threshold for an operating condition for the first computing device (302) based on the first threshold;
determine a third threshold for an operating condition for the second computing device (304); and
determine whether a virtual machine, VM, (235) may be executed within one of the first computing device (302) and the second computing device (304) without causing one of the second threshold and the third threshold to be exceeded.

7. The system of claim 6, wherein the second threshold is equal to the third threshold.

8. The system of claim 6, wherein the second threshold and the third threshold are set to a value equal to the first threshold divided by a number of computing devices within the cluster.

9. The system of claim 6, wherein the second threshold is based on at least one of a temperature and a power supply capacity of the first computing device (302).

10. The system of claim 6, wherein the management device (308) is configured to receive a value of the operating condition of the first computing device (302).

11. The system of any of claims 6 to 10, wherein the management device (308) is configured to determine whether the VM (235) may be executed within the first computing device (302) based on determining whether executing the VM (235) is expected to cause the operating condition of the first computing device (302) to exceed the second threshold based on the value received.

12. A method of managing a computing device (302), the method comprising:
receiving a threshold for an operating condition of a first computing device (302), wherein the operating condition includes at least one of a temperature of the first computing device (302) and a power consumption of the first computing device (302);
determining, by a processor, an expected resource utilization of a computer program (235); and
determining, by a processor, whether the computer program (235) may be executed within the first computing device (302) based on the operating condition threshold and the expected resource utilization of the computer program (235).

13. The method of claim 12, further comprising:
receiving a first value of the operating condition of the first computing device (302);
determining an expected change in the operating condition if the computer program (235) is executed within the first computing device (302) based on the expected resource utilization of the computer program.(235); and
determining whether the expected change in the operating condition is expected to cause the operating threshold to be exceeded.

14. The method of claim 12 or 13, further comprising:
determining whether the computer program (235) may be migrated to a second computing device (304) based upon the determination that the computer program (235) may not be executed within the first computing device (302) without causing the operating condition to exceed the operating condition threshold.

15. A computer-readable storage medium having computer-executable instructions embodied thereon, wherein, when executed by a processor (308), the computer-executable instructions cause the processor (308) to perform the method of any of claims 12 to 14.
